Europäisches Patentamt

European Patent Office

Office européen des brevets

(19)

(11)  EP 1 019 927 B1

(12)  **FASCICULE DE BREVET EUROPEEN**

(45) Date de publication et mention
de la délivrance du brevet:
**08.12.2004  Bulletin 2004/50**

(51) Int Cl.⁷: $H01F\ 41/14$, $H01F\ 17/04$, $H01F\ 3/14$

(21) Numéro de dépôt: **98945384.0**

(22) Date de dépôt: **28.09.1998**

(86) Numéro de dépôt international:
**PCT/FR1998/002069**

(87) Numéro de publication internationale:
**WO 1999/017319 (08.04.1999 Gazette 1999/14)**

(54) **PROCEDE POUR AUGMENTER LA FREQUENCE DE FONCTIONNEMENT D'UN CIRCUIT MAGNETIQUE ET CIRCUIT MAGNETIQUE CORRESPONDANT**

VERFAHREN ZUR ERHÖHUNG DER ARBEITSFREQUENZ EINES MAGNETKREISES UND KORRESPONDIERENDER MAGNETKREIS

METHOD FOR INCREASING THE OPERATING FREQUENCY OF A MAGNETIC CIRCUIT AND CORRESPONDING MAGNETIC CIRCUIT

(84) Etats contractants désignés:
**DE FR GB IT**

(30) Priorité: **29.09.1997  FR 9712080**

(43) Date de publication de la demande:
**19.07.2000  Bulletin 2000/29**

(73) Titulaire: **COMMISSARIAT A L'ENERGIE ATOMIQUE**
**75015 Paris (FR)**

(72) Inventeurs:
• **ALBERTINI, Jean-Baptiste**
**F-38100 Grenoble (FR)**

• **PEUZIN, Jean-Claude**
**F-38320 Herbeys (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 308 334**

• **PATENT ABSTRACTS OF JAPAN vol. 097, no. 007, 31 juillet 1997 & JP 09 074016 A (RES INST ELECTRIC MAGNETIC ALLOYS), 18 mars 1997**

## Description

### Domaine technique

La présente invention a pour objet un procédé pour augmenter la fréquence de fonctionnement d'un circuit magnétique et un circuit magnétique correspondant.

Elle trouve une application dans la réalisation de composants magnétiques, notamment de composants inductifs (typiquement des inductances, soit unitaires, soit multiples, soit faisant partie d'un réseau de composants élémentaires intégrés sur une même puce), dans la réalisation de transformateurs, de capteurs de champ magnétique ou de moyens de mesure d'une grandeur liée à un champ magnétique, de têtes d'enregistrement magnétique, etc...

### Etat de la technique antérieure

Dans les composants inductifs (inductances, transformateurs, têtes magnétiques, etc...), il est avantageux de canaliser le flux magnétique par un circuit magnétique de forte perméabilité, car cela permet soit un gain de performances à encombrement donné, soit une diminution d'encombrement pour des performances données.

Dans les composants macroscopiques radiofréquence, les circuits magnétiques sont en général en ferrite massif alors que, dans les composants intégrés, on utilise plus fréquemment des empilements de couches minces d'alliage ferromagnétique (typiquement du Fe-Ni) et d'isolant. La mise au point de tels composants intégrés fait actuellement l'objet d'une recherche active dans de nombreux laboratoires.

La miniaturisation de ces composants permet d'augmenter leur fréquence de travail en réduisant notamment les phénomènes de propagation et de courants induits.

Les performances des composites isolant/alliage en couches minces sont très supérieures à celles des composants en ferrite et permettent d'envisager un fonctionnement à des fréquences débordant largement le domaine radiofréquence. Néanmoins, ces matériaux ont leurs propres limitations, liées soit à des phénomènes fondamentaux, soit à la technologie utilisée. Deux phénomènes limitatifs liés à la technologie sont l'effet de peau et la résonance dimensionnelle. Tous deux ont pour effet de diminuer la perméabilité effective du composite et d'altérer sa réponse en fréquence.

Le premier peut être évité (ou limité) classiquement en choisissant une épaisseur des couches magnétiques de l'empilement nettement plus faible (ou du même ordre de grandeur) que la profondeur de peau. A titre d'exemple, l'épaisseur de peau est de 0,2 μm à 1 GHz pour l'alliage Fe-Ni.

Le second, lié à la résonance dimensionnelle, est associé à la propagation électromagnétique au sein du composite dans les directions parallèles aux couches. Il peut être limité, d'une part, en conservant une épaisseur d'isolant suffisante entre les couches magnétiques (au détriment du facteur de remplissage utile) et d'autre part en limitant les dimensions latérales des circuits magnétiques ou des noyaux.

Ainsi, pour une fréquence de 1GHz, la largeur du circuit ou du noyau magnétique en FeNi doit être très inférieure à 700μm, une condition tout juste compatible avec un souci d'intégration.

Une autre limitation, non liée à la technologie et de nature plus fondamentale correspond au phénomène de résonance gyromagnétique. La fréquence de cette résonance constitue, en effet, une limite supérieure au domaine de fréquence utilisable, sachant qu'aux fréquences inférieures à la résonance, la perméabilité relative est pratiquement constante et égale à sa valeur statique. Il est bien connu que, dans un alliage de composition donnée, on peut, par de simples traitements thermiques, faire varier la perméabilité et la fréquence de résonance. Ainsi, la limitation due à la résonance gyromagnétique ne s'exprime-t-elle pas uniquement en terme de fréquence. On montre, en effet, que le produit $\mu_s . f_r^2$, où $\mu_s$ est la valeur statique de la perméabilité et $f_r$ la fréquence de résonance gyromagnétique, est constant pour un alliage de composition donnée lorsque, par. des traitements après dépôt, on modifie à la fois $\mu_s$ et $f_r$. Ce produit constitue donc un facteur de mérite du matériau, qui ne dépend que de sa composition. On montre, en fait, qu'il ne dépend pratiquement que. de l'aimantation spontanée de l'alliage. Pour l'alliage Fe-Ni, on a :

$$\mu_s . f_r^2 = 1300 \text{ GHz}^2$$

Pour un composite de coefficient de remplissage η, on a simplement :

$$\mu_s . f_r^2 = \eta . 1300 \text{ GHz}^2$$

L'existence d'une telle relation montre que l'on ne peut pas modifier $\mu_s$ et $f_r$ de manière indépendante. En particulier, un fonctionnement à des fréquences de plus en plus élevées impose une diminution de la perméabilité magnétique.

Pour une fréquence de travail f donnée, on cherche donc, en général, à conditionner le matériau de telle sorte que la fréquence de résonance $f_r$ soit située très largement au-dessus de f. Cela suppose que l'on puisse adapter le matériau à l'application considérée. On pourrait penser modifier, la fréquence de résonance par un traitement thermique après dépôt. Mais, cette. technique présente des inconvénients : la compatibilité n'est pas assurée avec les procédés de fabrication du dispositif, et de toute manière, les variations obtenues restent faibles.

L'invention a pour but de remédier à ces inconvénients.

Exposé de l'invention

Il s'agit d'augmenter la fréquence de fonctionnement d'un circuit magnétique. On entend par augmentation de la fréquence de fonctionnement d'un circuit magnétique, le fait de repousser à plus haute fréquence au moins le phénomène le plus limitatif, ce phénomène pouvant être notamment la résonance gyromagnétique, l'effet de peau, la résonance dimensionnelle, etc ...

A cette fin, l'invention préconise d'introduire dans le circuit, des coupures (ou "intervalles", "interruptions", "entrefers", "rainures" ou "gap" en terminologie anglo-saxonne), ces coupures étant perpendiculaires au sens du champ, c'est-à-dire perpendiculaire à la ligne moyenne du circuit. Ces coupures vont créer un champ démagnétisant très efficace dans le matériau. La perméabilité magnétique va se trouver abaissée sans que soient modifiés ni la forme globale du circuit, ni le matériau magnétique. Par exemple, dans le cas des têtes magnétiques d'enregistrement (dans lesquelles il existe déjà au moins un entrefer), on peut ajouter des coupures dans le reste du circuit pour augmenter la tenue en fréquence du matériau magnétique. Plus on introduit de coupures perpendiculaires au flux moyen (donc à la ligne moyenne du circuit magnétique dans le sens du champ); plus on augmente le champ démagnétisant et plus on diminue la perméabilité du circuit, améliorant d'autant sa tenue en fréquence. On peut. ainsi adapter la fréquence de coupure du circuit magnétique à un cahier des charges et obtenir la meilleure perméabilité, possible pour cette plage de fréquence avec un matériau donné.

On peut souligner que, dans un composant magnétique, on cherche parfois à maximiser la perméabilité du circuit magnétique afin de minimiser les pertes. Or, en raison de la relation soulignée plus haut, montrant que le produit de la perméabilité par le carré de la fréquence de résonance reste constant pour un matériau donné, plus la perméabilité magnétique. effective du matériau est élevée plus la fréquence de résonance gyromagnétique est basse, ce qui limite la plage d'utilisation en fréquence du composant. Cette limitation peut gêner pour des applications haute fréquence comme la réalisation d'inductances intégrées HF (utiles notamment pour la téléphonie mobile), les transformateurs HF, les têtes d'enregistrement magnétique HF, ...

La présente invention va à l'encontre de ces tendances en préconisant au contraire une diminution de la perméabilité.

De façon précise, la présente invention a donc pour objet un procédé pour augmenter la fréquence de fonctionnement d'un circuit magnétique, ce procédé étant caractérisé par le fait qu'il consiste à former dans au moins une partie de ce circuit, des coupures perpendiculaires à la ligne moyenne du circuit magnétique.

Selon un mode de mise en oeuvre avantageux, les coupures sont formées dans des plans parallèles.

Selon un autre mode de mise en oeuvre, on forme des coupures périodiques avec un certain pas et une certaine épaisseur.

La présente invention a également pour objet un circuit magnétique, qui est caractérisé par le fait qu'il comprend, dans au moins une partie, des coupures perpendiculaires à la ligne moyenne du circuit magnétique et disposées dans des plans parallèles.

Dans une variante avantageuse, ces coupures sont périodiques.

L'invention présente de nombreux avantages :

a) Elle permet d'adapter la plage de fréquence d'utilisation d'un noyau ou d'un circuit magnétique, donc d'un composant, en conservant la meilleure perméabilité possible. En' pratique, on peut, en gardant un même matériau magnétique, choisir une taille de coupures et un espacement de ces dernières de manière à ce que, en particulier, la fréquence de résonance gyromagnétique et les autres fréquences caractéristiques soient adaptées au cahier des charges du composant. Au lieu de changer soit de matériau magnétique, soit la forme du circuit magnétique pour chaque plage de fréquence désirée, on peut ainsi disposer d'une large plage de fréquences possibles pour chaque couple (matériau, forme de circuit).

b) Elle est totalement compatible avec les procédés de fabrication des circuits.

c) Elle ne change pas la forme macroscopique du composant ni de son circuit magnétique.

d) Elle permet de conserver un même matériau magnétique pour créer des composants ayant des fréquences de fonctionnement différentes.

Brève description des dessins

- la figure 1 montre les variations de la fréquence de résonance gyromagnétique $f_r$ en fonction du rapport e/p de l'épaisseur (e) au pas (p) des coupures ;

- les figures 2a à 2e montrent les étapes de réalisation d'une partie d'un circuit magnétique selon une première variante de l'invention ;

- les figures 3a à 3c montrent les étapes de réalisation d'une partie d'un circuit magnétique selon une seconde variante de l'invention ;

- la figure 4 montre un exemple de circuit magnétique selon l'invention, en forme de tore ;

- la figure 5 montre un autre exemple de circuit magnétique selon l'invention adapté à une tête magnétique de lecture.

**Exposé détaillé de modes de réalisation**

Réaliser une couche magnétique interrompue périodiquement par des coupures d'épaisseur (e) pratiquées dans le sens de la ligne moyenne du circuit magnétique avec une période spatiale (p), avec un matériau ayant une perméabilité intrinsèque $\mu$, de valeur statique $\mu_s$, revient à créer artificiellement une couche de matériau de perméabilité effective $\mu_e$, de valeur statique $\mu_{es}$, telle que :

$$1/\mu_{es}=(1/\mu_s)+(e/p)$$

Lorsque (e/p) augmente, $1/\mu_{es}$ augmente de manière correspondante ce qui montre que $\mu_{es}$ diminue. La diminution de $\mu_{es}$ s'accompagne d'une augmentation corrélative de la fréquence de résonance conformément à la relation :

$$\mu_{es} \cdot f_r^2 = C,$$

où C est une constante.

Pour une fréquence $f_r$ désirée, connaissant les constantes C et $\mu_s$ d'un matériau, on peut calculer la perméabilité $\mu_{es}$ à réaliser et trouver un couple épaisseur-pas (e,p) satisfaisant l'équation $1/\mu_{es} = (1/\mu_s) + (e/p)$. Le circuit obtenu, avec ses coupures de dimension et périodicité correspondantes, présente alors une tenue en fréquence jusqu'à $f_r$.

Les formules précédentes sont, en fait, assez approximatives, la notion de perméabilité devenant elle-même moins précise lorsqu'on s'approche de l'échelle des domaines magnétiques. Pour obtenir une meilleure précision, on peut aussi, pour chaque matériau magnétique envisagé, réaliser des dispositifs expérimentaux avec des coupures de dimensions et périodicités variables, et mesurer précisément la tenue en fréquence du circuit magnétique pour retenir finalement l'optimum.

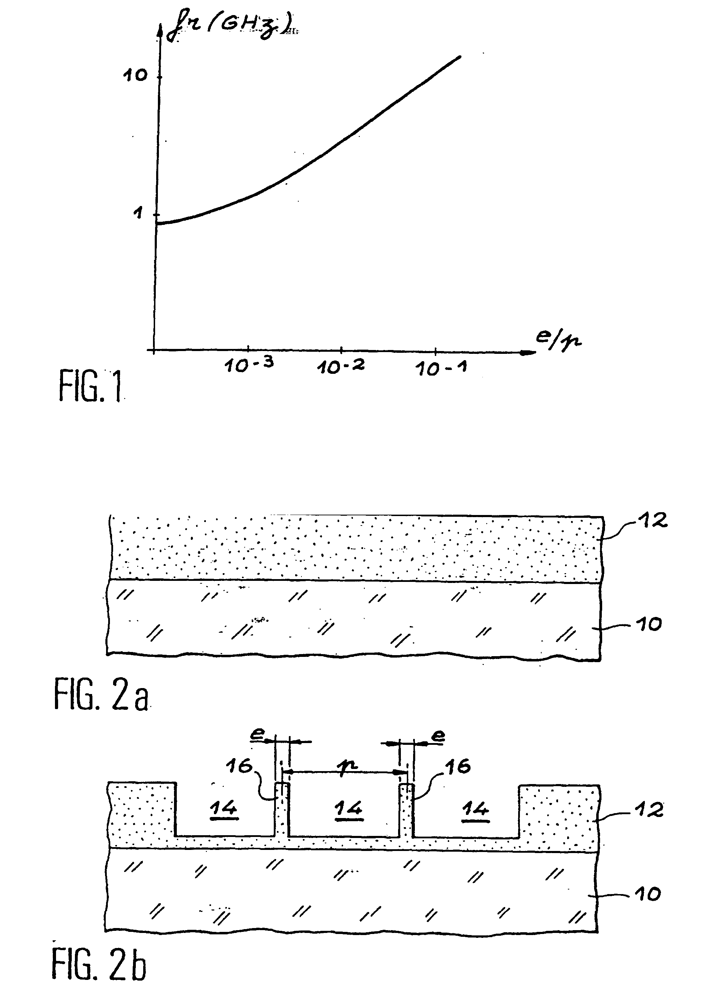

L'invention s'applique aux circuits magnétiques monocouches aussi bien qu'aux circuits multicouches. La figure 1 donne, par exemple, la variation de la fréquence de coupure $f_c$ en fonction du rapport (e/p) pour un composite de fer-nickel et de nitrure de silicium. La relation liant la perméabilité $\mu_s$ et la fréquence $f_r$ est, dans ce cas : $\mu_s \cdot f_r^2 = 1300(GHz)^2$.

En l'absence de coupures, la fréquence $f_r$ se situe un peu en dessous du Gigahertz et augmente jusqu'à environ 10 GHz pour des coupures dont l'épaisseur est de l'ordre du dixième du pas (e/p=$10^{-1}$).

.De. façon plus grossière, on peut aussi estimer l'influence des entrefers périodiques Sur les deux autres fréquences caractéristiques liées à l'effet de peau et à la résonance dimensionnelle. En effet, dans un circuit magnétique de forme quelconque, mais comportant des entrefers périodiques, donc régulièrement répartis sur la longueur du circuit, on peut considérer que la perméabilité effective définie par la formule $1/\mu_{es}=1/\mu_s+e/p$ prend une signification locale. On montre alors que les deux fréquences limites considérées, celle due à l'effet de peau et celle due à la résonance dimensionnelle, sont multipliées respectivement par

$$\sqrt{\frac{\mu_s}{\mu_{es}}}$$

et par $\dfrac{\mu_s}{\mu_{es}}$.

Dans toutes ces considérations, on suppose bien sûr que, pour un matériau multicouches (ou feuilleté), on a pratiqué des rainures sur l'ensemble des couches.

Les figures 2a à 2e illustrent cinq étapes d'un procédé de réalisation d'une couche magnétique enterrée dans un substrat. Dans cet exemple, la couche magnétique est une branche d'un circuit magnétique appartenant à une tête magnétique verticale à bobinage intégré telle que décrite dans la demande FR-A-2 745 111. Par ailleurs, cette couche magnétique est multicouche et les épaisseurs des différentes couches ne sont pas à la même échelle sur ces figures.

Dans ce procédé, on part d'un substrat 10 (fig. 2a), qui est par exemple en silicium. On dépose sur ce substrat une couche épaisse 12, de plusieurs micromètres d'isolant, par exemple de silice. Cette couche 12 est ensuite gravée à l'aide d'un masque possédant des ouvertures espacées périodiquement. On obtient alors (fig. 2b) des caissons 14 séparés par des parois 16. L'épaisseur de celles-ci définit l'épaisseur e des futures coupures et leur périodicité définit le pas p desdites futures coupures.

On dépose ensuite sur l'ensemble (fig: 2c) une sous-couche 20, par exemple par pulvérisation' cathodique en Fe-Ni, et l'on forme un masque de résine 22 laissant dégagée la zone où l'on veut réaliser la couche magnétique interrompue par les coupures.

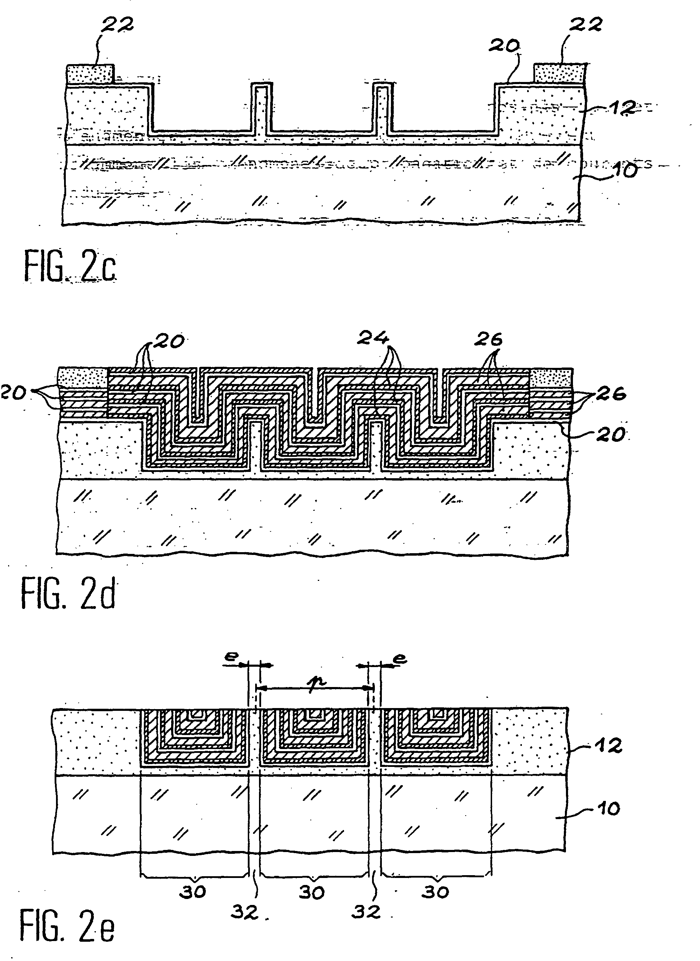

On dépose ensuite la couche magnétique 24 (figure 2d) par exemple par croissance électrolytique de FeNi à partir de la sous-couche 20. On délaque ensuite la résine, on recuit éventuellement l'ensemble et on dépose une couche d'isolant 26, par exemple en $Si_3N_4$.

Les opérations de dépôt d'une sous-couche 20, de masquage, de réalisation d'un dépôt magnétique 24, de délaquage de la résine et de dépôt d'une couche d'isolant. 26 sont répétées dans cet exemple de réalisation plusieurs fois, de façon à obtenir un circuit magnétique composé d'un empilement de couches magnétiques séparées par dés couches non magnétiques, la deuxième couche magnétique n'étant pas forcément recouverte par une couche isolante.

On planarise ensuite l'empilement ainsi obtenu par rodage mécanique ou mécano-chimique (fig. 2e). On obtient alors une suite de pavés magnétiques 30 séparés les uns des autres par des coupures 32.

Dans le cas d'un circuit magnétique monocouche, on fait croître, par exemple electrolytiquement, la première couche magnétique 24 à partir de la sous-couche 20 suivant une hauteur suffisante pour remplir les caissons et on planarise ensuite comme à la figure 2e après délaquage.

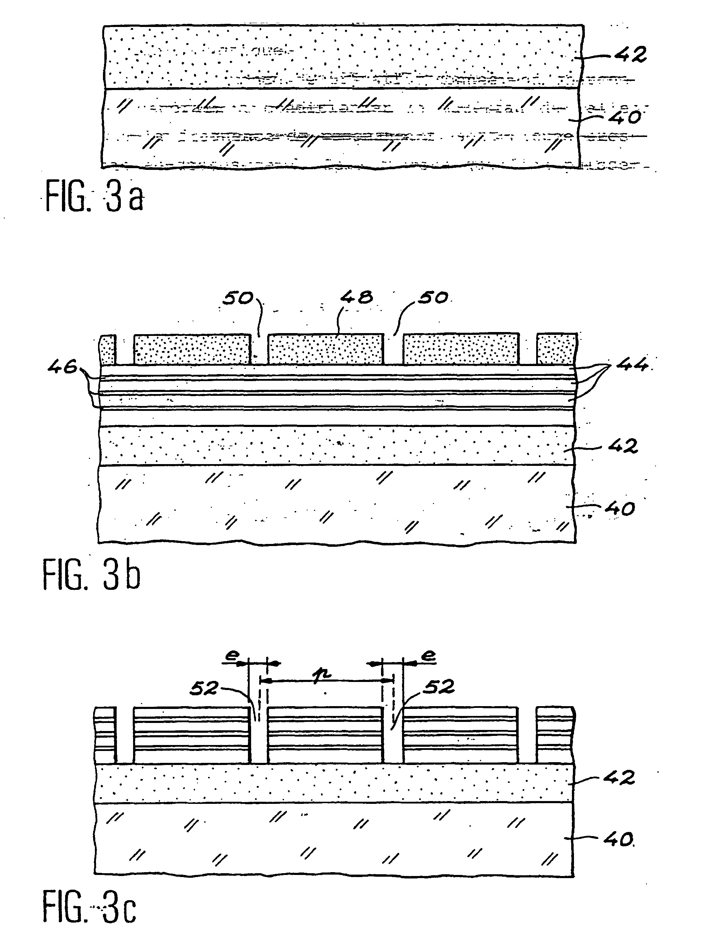

Les figures 3a à 3c illustrent schématiquement un autre mode de mise en oeuvre du procédé de l'invention. Sur la figure 3a, on part d'un substrat 40 (par exemple en silicium) et l'on recouvre ce substrat d'une couche isolante 42 (par exemple en $SiO_2$). On dépose ensuite un empilement, de couches alternées (fig.. 3b), respectivement magnétiques 44 et isolantes 46. Les couches magnétiques peuvent être déposées par pulvérisation cathodique. Les couches isolantes peuvent être en $Si_3N_4$ et être disposées par pulvérisation cathodique. Un masque de résine 48 est ensuite formé avec des ouvertures 50.

Enfin, par une opération de gravure (fig. 3c), on forme les coupures 52 dans l'empilement multicouche.

Comme précédemment, cette variante de réalisation peut être utilisée pour former un matériau magnétique monocouche.

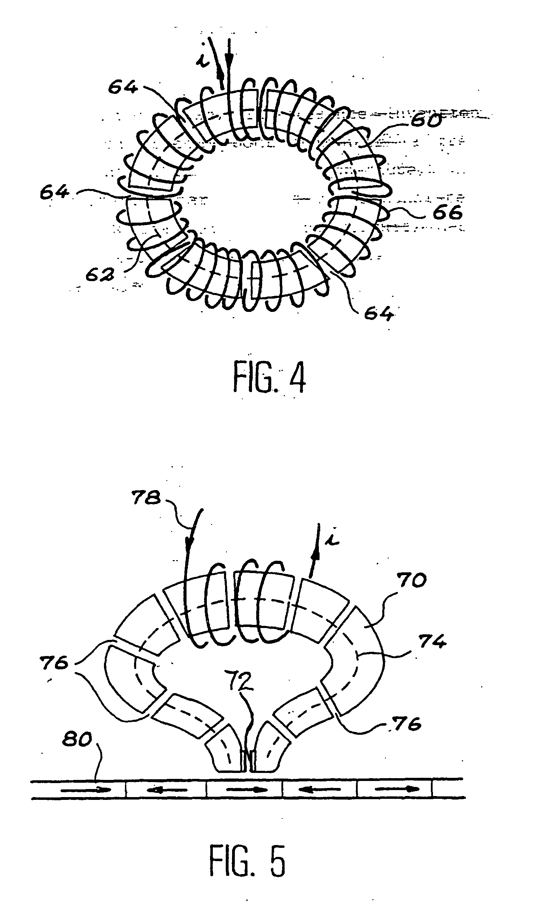

La figure 4 montre un exemple de circuit magnétique selon l'invention. Il s'agit d'un tore 60 dont la ligne moyenne 62 est un cercle. Ce circuit est muni de coupures 64 perpendiculaires à cette ligne moyenne, donc radiales. Le plan de ces coupures tourne de 360° lorsqu'on parcourt le circuit. Un enroulement 66 est également figuré.

La figure 5 montre un autre exemple de circuit magnétique et correspond à une tête magnétique de lecture. Ce circuit 70 présente une partie arrière arrondie et deux branches latérales se rapprochant pour délimiter un entrefer 72. La ligne moyenne 74 présente une forme sensiblement circulaire à l'arrière et deux branches se rapprochant. Les coupures 76 sont perpendiculaires à cette ligne moyenne. Le circuit se complète par un bobinage conducteur 78 et il est placé en regard d'un support magnétique 80 où sont inscrites des informations magnétiques.

On comprend, par ces exemples, que les coupures n'ont pas nécessairement une même direction tout au long du circuit. Cette direction peut changer d'un point à un autre. Elle dépend de la ligne moyenne du circuit, donc de la direction du flux magnétique canalisé par le circuit.

## Revendications

**1.** Procédé pour augmenter la fréquence de fonctionnement d'un circuit magnétique, **caractérisé par le fait qu'**il consiste à former, dans au moins une partie de ce circuit, des coupures (32, 52) perpendiculaires à la ligne moyenne (62, 74) du circuit magnétique.

**2.** Procédé selon la revendication 1, dans lequel les coupures sont formées dans des plans parallèles.

**3.** Procédé selon la revendication 1, dans lequel on forme des coupures. périodiques (32, 52) avec un certain pas (p) et une certaine épaisseur (e).

**4.** Circuit magnétique, **caractérisé par le fait qu'**il comprend, dans au moins une partie, des coupures (32, 52) perpendiculaires à la ligne moyenne (62, 74) du circuit magnétique (60, 70).

**5.** Circuit magnétique selon la revendication 4, dans lequel les coupures sont périodiques (32, 52).

**6.** Circuit selon l'une quelconque des revendications 4 et 5, dans lequel la partie du circuit comprenant les coupures est formée par une seule couche .de matériau magnétique.

**7.** Circuit selon l'une quelconque des revendications 4 et 5, dans lequel la partie du circuit comprenant des coupures et formée par un empilement de couches alternativement magnétiques (44) et isolantes 46).

## Patentansprüche

**1.** Verfahren zur Erhöhung der Arbeitsfrequenz eines Magnetkreises; **dadurch gekennzeichnet, dass** es darin besteht, in wenigstens einem Teil dieses Kreises Unterbrechungen (32, 52) zu bilden, senkrecht zu der Mittellinie (62, 74) des Magnetkreises.

**2.** Verfahren nach Anspruch 1, in dem die Unterbrechungen in parallelen Ebenen gebildet werden.

**3.** Verfahren nach Anspruch 1, in dem man periodische Unterbrechungen (32, 52) mit einer bestimmten Teilung (p) und einer bestimmten Dicke (e) bildet.

**4.** Magnetkreis, **dadurch gekennzeichnet, dass** er in wenigstens einem Teil Unterbrechungen (32, 52) aufweist, die senkrecht sind zu der Mittellinie (62, 74) des Magnetkreises (60, 70).

**5.** Magnetkreis nach Anspruch 4, bei dem die Unterbrechungen (32. 52) periodisch sind.

**6.** Magnetkreis nach einem der Ansprüche 4 und 5, bei dem der die Unterbrechungen umfassende Teil des Kreises durch eine einzige Schicht aus magnetischem Material gebildet wird.

7. Magnetkreis nach einem der Ansprüche 4 und 5, bei dem der Unterbrechungen umfassende Teil des Kreises durch einen Stapel aus abwechselnd magnetischen (44) und isolierenden (46) Schichten gebildet wird.

**Claims**

1. A process for increasing the operating frequency of a magnetic circuit, **characterized by** the fact that it consists of forming, in at least one part of this circuit, gaps (32, 52) perpendicular to the median line (62, 74) of the magnetic circuit.

2. A process involved in claim 1, in which the gaps are formed in parallel planes.

3. A process involved in claim 1, in which gaps (32, 52) are formed at regular intervals with a certain pitch (p) and a certain width (e).

4. A magnetic circuit, **characterized by** the fact that it has, in at least one part of it, gaps (32, 52) perpendicular to the median line (62, 74) of the magnetic circuit (60, 70).

5. A magnetic circuit involved in claim 4, in which the gaps (32, 52) are spaced at regular intervals.

6. A circuit involved in either one of claims 4 and 5, in which the part of the circuit having the gaps is formed by a single layer of magnetic material.

7. A circuit involved in either one of claims 4 and 5, in which the part of the circuit having the gaps is formed by a stack of alternately magnetic (44) and insulating (46) layers.

FIG. 1

FIG. 2a

FIG. 2b

FIG. 2c

FIG. 2d

FIG. 2e

FIG. 3a

FIG. 3b

FIG. 3c

FIG. 4

FIG. 5